# EUROPÄISCHE PATENTANMELDUNG

(11) **EP 2 510 782 A2**
(43) Veröffentlichungstag der Anmeldung: **17.10.2012**
(21) Anmeldenummer: 12002443.5
(22) Anmeldetag: 04.04.2012
(51) Int. Cl.: A01K 1/00

(54) **Lüftungsdecke**

(30) Priorität: 14.04.2011 DE 102011017065
(71) Anmelder: Pollmeier, Thomas, 48612 Horstmar (DE)
(72) Erfinder: Pollmeier, Thomas, 48612 Horstmar (DE)
(74) Vertreter: Weeg, Thomas

(57) **Zusammenfassung**

Die vorliegende Erfindung bezieht sich auf eine Lüftungsdecke (2) für Stallgebäude, die auf ihrer dem Stallraum zugewandten Unterseite mit beabstandet zueinander angeordneten Lüftungsschlitzen (6) versehene Zuluftplatten (4) und auf ihrer Oberseite zumindest eine Dämmschicht (8) aus einem Fasermaterial aufweist.

Um eine Lüftungsdecke zu schaffen, die eine verbesserte Entkeimungswirkung bei einer geringeren Schmutzanfälligkeit ermöglicht, wird vorgeschlagen, dass oberhalb der Zuluftplatten (4) eine Materiallage (16) mit einer keimreduzierenden Ausrüstung angebracht ist und/oder die Dämmschicht (8) eine keimreduzierende Ausrüstung aufweist.

## Beschreibung

Die vorliegende Erfindung bezieht sich auf eine Lüftungsdecke für Stallgebäude, die auf ihrer dem Stallraum zugewandten Unterseite mit beabstandet zueinander angeordneten Lüftungsschlitzen versehene Zuluftplatten und auf ihrer Oberseite zumindest eine Dämmschicht aus einem Fasermaterial aufweist.

Gattungsgemäße Lüftungsdecken sind beispielsweise aus der Schrift DE 1 992 714 bekannt. Die Lüftungsdecken ermöglichen eine sehr gleichmäßige und zugfreie Belüftung von Stallgebäuden, insbesondere auch wenn die Belüftung durch einen Unterdruck im Stallraum erfolgt. Durch die Vielzahl der Lüftungsschlitze in den Lüftungsplatten ergibt sich eine langsame Luftströmung, die keine Erkältungsgefahren für die im Stall befindlichen Tiere schafft. Die Dämmschicht aus einem Fasermaterial, insbesondere einem Vlies aus einer Glas- oder Steinwolle, wirkt temperaturausgleichend und vergleichmäßigt außerdem die Luftströmung.

In der Intensivtierhaltung wird neuerdings darüber nachgedacht, die Krankheitsgefährdung der Tiere zu verringern, indem die Zahl von Krankheitserregern in der in den Stallraum beförderten Zuluft verringert wird. Aus der Schrift DE 20 2005 000 523 U1 ist es bekannt, für Warenkühlanlagen eine gesonderte Entkeimungsvorrichtung vorzusehen. In Tierställen ergibt sich jedoch das Problem, das die zugeführte Zuluft häufig mit einer erhöhten Staubmenge belastet ist und gesonderte Entkeimungsvorrichtungen im Zuluftbereich dazu neigen, schnell zu verschmutzen, wodurch die Entkeimungswirkung erheblich reduziert wird.

Demgemäß ist es die Aufgabe der vorliegenden Erfindung, eine Lüftungsdecke zu schaffen, die eine verbesserte Entkeimungswirkung bei einer geringeren Schmutzanfälligkeit ermöglicht.

Die Aufgabe wird für eine gattungsgemäße Lüftungsdecke gelöst, indem oberhalb der Zuluftplatten eine Materiallage mit einer keimreduzierenden Ausrüstung angebracht ist und/oder die Dämmschicht eine keimreduzierende Ausrüstung aufweist.

Durch eine großflächige auf die Zuluftplatten aufgelegte Materiallage mit einer keimreduzierenden Ausrüstung und/oder eine Dämmschicht mit einer keimreduzierenden Ausrüstung ist es möglich, die Entkeimungswirkung auf die Zuluft erheblich zu steigern. Durch die Verlagerung der Entkeimung aus einem zentralen Zuluftkanal in die Deckenfläche ergibt sich die entkeimungssteigernde Wirkung zunächst aus der Verringerung der Strömungsgeschwindigkeit der Zuluft, mit der diese durch die erfindungsgemäß ausgerüstete keimreduzierenden Materiallage und/oder die keimreduzierend ausgerüsteten Dämmschicht hindurch strömt. Während in einem Zuluftkanal mit gesonderten Filtern vergleichsweise hohe Strömungsgeschwindigkeiten herr schen, bei denen nur ein Teil der im Luftstrom mitgeführten Keime im Filter abgeschieden wird, ohne dass gesonderte keimreduzierende Ausrüstungen verwendet werden, und sich daraus folgend eine entsprechend weniger zufrieden stellende Wirkung ergibt, haben die Keime bei den erheblich geringeren Strömungsgeschwindigkeiten durch eine Lüftungsdecke eine deutlich erhöhte Kontaktzeit mit den keimreduzierenden Stoffen, woraus sich eine verbesserte Wirkung ergibt. Aufgrund der geringeren Strömungsgeschwindigkeit können sich Keime besser an den mit einer keimreduzierenden Ausrüstung versehenen Fasern der Materiallage und/oder der Dämmschicht anlagern, und durch die keimreduzierende Ausrüstung werden die Keime zusätzlich geschädigt oder ganz vernichtet. Unerwünschte Ansammlungen von störenden Keimen in Filtern werden so vermieden.

Ein weiterer Vorteil ist die geringere Verschmutzungsanfälligkeit der auf der Lüftungsdecke angebrachten Materiallage und/oder der Dämmschicht. Die Materiallage und/oder die Dämmschicht kann über die gesamte Deckenfläche ausgebreitet werden. Eine in der Zuluft enthaltene Staubfracht kann sich auf die größere Fläche verteilen und verstopft nicht einen vergleichsweise kleinen zentralen Filter innerhalb kürzester Zeit. Die in der Materiallage und/oder der Dämmschicht enthaltenen keimreduzierenden Stoffe werden weniger schnell durch Staub abgedeckt und inaktiviert.

Ein weiterer Vorteil der Erfindung ist in der höheren Energieeffizienz und den niedrigeren Betriebskosten zu sehen. Um bei der Verwendung zentraler Filter und den darin erforderlichen hohen Strömungsgeschwindigkeiten überhaupt Keime abscheiden zu können, müssen die herkömmlichen Keimfilter einen hohen Differenzdruck beziehungsweise eine geringe Luftdurchlässigkeit aufweisen, aus der ein hoher Druckverlust mit einem entsprechend größeren Energieaufwand resultiert, um die Zuluft überhaupt durch einen Filter befördern zu können. Demgegenüber verursacht die auf die Zuluftplatten aufgelegte Materiallage und/oder die Dämmschicht, die über die Fläche verteilt ist, deutlich geringere Druckverluste, wodurch sich der Energieaufwand für den Betrieb der erforderlichen Gebläse erheblich verringert.

Die keimreduzierende Ausrüstung besteht aus keimreduzierend wirkenden Stoffen, mit denen die Materiallage ausgestattet ist. Die Materiallage kann aus einem Vlies oder einem Gewebe oder einem Gewirk bestehen, das in einem keimreduzierend wirkenden flüssigen Stoff getränkt und anschließend getrocknet worden ist, oder die Materiallage wird mit einem keimreduzierend wirkenden Stoff laufend nachgetränkt. Bei trockenen keimreduzierend wirkenden Stoffen, wie beispielsweise Pulvern, kann das Pulver auch in die Materiallage eingestreut sein. Entsprechendes gilt für eine keimreduzierend ausgerüstete Dämmschicht.

Als keimreduzierend wirken insbesondere solche Stoffe, die auch eine desinfizierende Wirkung aufweisen. Hierunter fallen beispielsweise Wirkstoffe in Gestalt von Oxidationsmitteln wie Peressigsäure, Chlordioxid, Wasserstoffperoxid, Natriumhypochlorit, Chlor, Ozon, Chloramin T und Jod, aber auch andere Wirkstoffe wie Aldehyde, Ethylenoxid, Alkohole, Phenole wie Chlorxylenol und Triclosan, Stickstoffverbindungen wie beispielsweise Ammonium, Guanidine oder Wirkstoffkombinationen.

Nach einer Ausgestaltung der Erfindung ist die Dämmschicht, die ebenfalls keimreduzierend ausgerüstet sein kann, zumindest zweilagig ausgestaltet und die Materiallage mit der keimreduzierenden Ausrüstung zwischen zwei zueinander benachbarten Lagen der Dämmschicht angeordnet. Diese Anordnung hat den Vorteil, dass grobe Staubpartikel zunächst von der darüber liegenden Dämmschicht aufgefangen werden und vor allem die kleineren Keimpartikel an die darunter liegende Materiallage gelangen, die dann voll der Wirkung der keimreduzierenden Ausrüstung ausgesetzt sind. Die Materiallage wird so vor einer allzu schnellen Verschmutzung geschützt.

Nach einer Ausgestaltung der Erfindung ist die Materiallage aus einem hydrophilen Material hergestellt. Durch das hydrophile Material lagert sich Feuchtigkeit an der Materiallage an. Wenn der keimreduzierend wirkende Stoff, mit dem die Materiallage ausgerüstet ist, Feuchtigkeit benötigt, um wirken zu können, kann der Stoff die Feuchtigkeit dem hydrophilen Material entnehmen. Es kann auch gezielt Feuchtigkeit und/oder eine Flüssigkeit an die Materiallage herangebracht werden, um die Wirkung des Stoffes zu unterstützen. Die zugeführte Feuchtigkeit und/oder Flüssigkeit kann sich über das hydrophile Material der Materiallage in der Fläche verteilen. Durch das hydrophile Material ist auch der lonenaustausch des keimreduzierend wirkenden Stoffes leichter, soweit dieser für die gewünschte Wirkung benötigt wird.

Nach einer Ausgestaltung der Erfindung ist der Lüftungsdecke eine Sensoreinheit zur Bestimmung der Luftfeuchte der in das Stallgebäude einströmenden Zuluft und ein Luftbefeuchter vorgeordnet, wobei der Luftbefeuchter in Abhängigkeit der von der von der Sensoreinheit ermittelten Luftfeuchte in den Zuluftstrom zu- und/oder abschaltbar ist. Durch den Feuchtesensor ist es möglich, gezielt einen bestimmten Feuchtewert in der Lüftungsdecke einzustellen.

Nach einer Ausgestaltung der Erfindung ist die Materiallage mit einer Tränkungsquelle verbunden. Durch die Tränkungsquelle kann Feuchtigkeit und/oder Flüssigkeit und/oder der keimreduzierend wirkende Stoff in die Materiallage eingebracht werden. Die Tränkungsquelle kann aus einer Tropfeinrichtung bestehen, die die Tropfen direkt auf die Materiallage tropft, wonach sich die Tropfen dann dort verteilen. Es kann als Tränkungsquelle aber auch ein Schlauchsystem vorgesehen sein, das die Flüssigkeit an beabstandeten Mündungsstellen an die Materiallage abgibt, oder es sind Dochte vorgesehen, über die eine Flüssigkeit an eine gewünschte Übergabestelle an die Materiallage transportiert wird. Über die Tränkungsquelle können verdunstende und sich dadurch verbrauchende keimreduzierend wirkende Stoffe nachgefördert werden. Es ist auch möglich, durch die temporäre Benutzung einer Tränkungsquelle die keimreduzierende Wirkung kurzfristig zu erhöhen, beispielsweise um einer akuten epidemischen Gefahr zu begegnen.

Nach einer Ausgestaltung der Erfindung ist die Materiallage mehrlagig aufgebaut. Durch die Mehrlagigkeit ist es möglich, Lagen, die jeweils mit unterschiedlichen Wirkstoffen ausgerüstet sind, zu einem Wirkstoffmix miteinander zu kombinieren, um eine individuelle und an den Stall und seinen Tierbesatz angepasste Ausrüstung der Materiallage zu schaffen. Durch mehrere Lagen der Materiallage kann auch die Dicke der Materiallage an eine konkrete Keimbelastung und Empfindlichkeit der Tiere gegenüber Krankheitserregern angepasst werden. Bei einem hohen Risikopotential können mehr Lagen verwendet werden als bei einem niedrigeren Risiko. Bei einer Verschmutzung einzelner Lagen können auch nur die verschmutzten Lagen ausgetauscht werden.

Es wird ausdrücklich darauf hingewiesen, dass die vorstehend beschriebenen Ausgestaltungen der Erfindungen jede für sich mit dem Gegenstand des Hauptanspruchs und anderer Ausgestaltungen kombinierbar ist, soweit sich aus dieser Beschreibung und den Ansprüchen nichts Gegenteiliges ergibt. Das gilt auch für einzelne Merkmale, die zu den einzelnen Ausgestaltungen genannt sind.

Weitere Abwandlungen und Details lassen sich der nachfolgenden gegenständlichen Beschreibung und der beigefügten Zeichnung entnehmen.

Die Erfindung soll nun anhand eines Ausführungsbeispiels näher beschrieben werden.

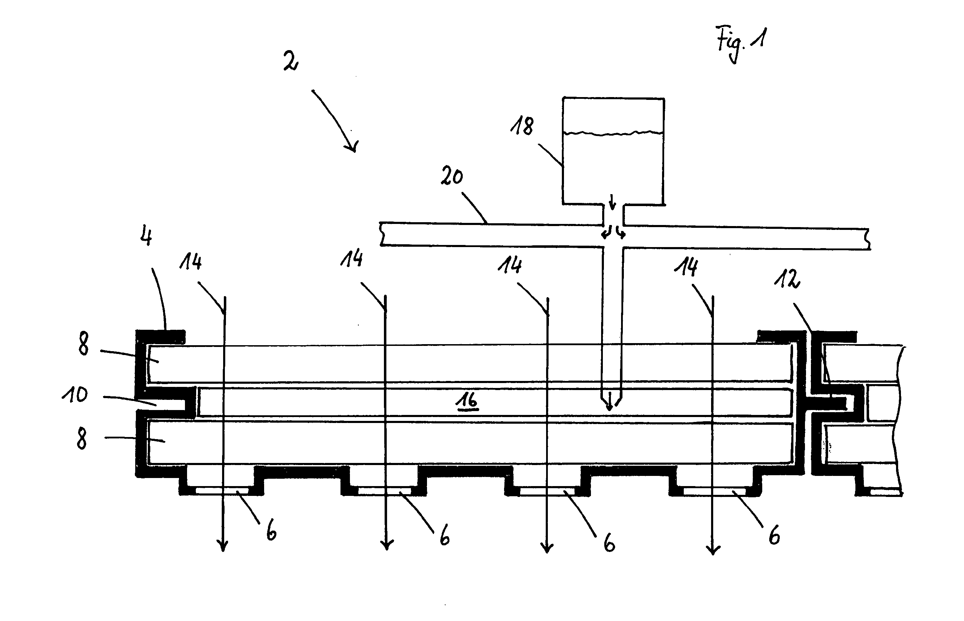

In der beigefügten Fig. 1 ist eine Lüftungsdecke 2 gezeigt, die aus einer Anzahl eine gemeinsame Deckenfläche bildenden Zuluftplatten 4 zusammengesetzt ist. Die Zuluftplatten 4 können als Paneele oder Kassetten ausgebildet sein, die miteinander zu einer Deckenfläche verbindbar sind. Die Zuluftplatten 4 verfügen über Lüftungsschlitze 6, die über die Fläche der Zuluftplatte 4 verteilt angeordnet sind. Durch die Lüftungsschlitze 6 kann Zuluft aus dem Deckenraum in den Stallraum strömen.

Auf die Zuluftplatte 4 sind im Ausführungsbeispiel zwei Dämmschichten 8 aufgelegt. Die Dämmschichten sind luftdurchlässig. Die Dämmschichten 8 bewirken eine Wärmedämmung des Stallraums zum darüber befindlichen Dachraum des Stallgebäudes.

Die Zuluftplatten 4 sind auf gegenüberliegenden Seiten im Ausführungsbeispiel mit Nuten 10 und Federn 12 versehen, über die sie mit angrenzenden Zuluftplatten 4 verbindbar sind. Durch Ineinanderstecken einer entsprechenden Anzahl von Zuluftplatten 4 können in Stallgebäuden komplette Lüftungsdecken zusammengesetzt werden.

Durch die Lüftungsschlitze 6 treten die Luftströme 14 hindurch. Dazu strömt die Zuluft in den Deckenraum oberhalb der Zuluftplatte 4. Von dort aus strömt die Zuluft durch die Dämmschichten 8 zu den Lüftungsschlitzen 6. Durch die Lüftungsschlitze 6 treten die Luftströme 14 schließlich in den eigentlichen Stallraum ein. Durch die große Zahl von Lüftungsschlitzen 6 kann das benötigte Luftvolumen in den unter der Lüftungsdecke 2 befindlichen Stallinnenraum gefördert werden, ohne dass es für die im Stall befindlichen Tiere zu unangenehmen Zugerscheinungen kommt.

Im Ausführungsbeispiel befindet sich zwischen der unteren und oberen Dämmschicht 8 eine Materiallage 16, die mit einer keimreduzierenden Ausrüstung versehen ist. Durch die Einbettung der Materiallage 16 zwischen zwei Dämmschichten 8 stoßen in den Luftströmen 14 mit bewegte Staubpartikel zunächst auf die Dämmschichten 8, bevor die Luftströme 14 die Materiallage 16 erreichen. Die Dämmschichten 8 stellen auf diese Weise eine Art Vorfilterfunktion für die durch die Lüftungsdecke 2 hindurchströmenden Luftströme dar. Der Teil des Luftstroms, der die Materiallage 16 erreicht, ist also schon von störenden Schmutzbestandteilen entlastet worden. In dieser Konfiguration treffen also nur noch kleinere Partikel wie insbesondere auch die unerwünschten Keime auf die Materiallage 16. Durch die Stoffe mit einer keimverringernden Wirkung, die sich in der Materiallage 16 befinden, ist es möglich, die durch die Materiallage 16 strömenden Keime zu beschädigen und nach Möglichkeit auch unschädlich zu machen.

Die Zahl und Anordnung der Dämmschichten 8, ihre absolute und relative Dicke sowie die Abmessungen der Zuluftplatten 4 können vom Ausführungsbeispiel abweichen. So kann es sinnvoll sein, nur eine einzige Dämmschicht 8 oder auch mehr als zwei Dämmschichten 8 zu verwenden, oder die Dicke der Dämmschicht wird an die jeweiligen Dämmungserfordernisse angepasst.

In Fig. 1 ist ein Tank 18 gezeigt, von dem aus eine im Tank befindliche Flüssigkeit über eine Schlauchleitung 20 in die Materiallage 16 verbracht werden kann. Bei der Flüssigkeit kann es sich entweder um Wasser handeln, durch das in der Materiallage 16 befindliche Chemikalien aktivierbar sind. Im Tank 18 können aber auch Stoffe mit keimreduzierender Wirkung gelagert sein, die über die Schlauchleitung 20 in die Materiallage 16 eingebracht werden, um dort von der durchströmenden Luft verbrauchte Stoffe zu ersetzen. Die Zuförderung einer Flüssigkeit aus dem Tank 18 kann wahlweise oder von einer Automatik gesteuert zu- und abschaltbar sein. Der Tank 18 mit der Schlauchleitung 20 bildet eine Tränkungsquelle, die mit der Materiallage 16 verbunden ist und dort zur Keimreduzierung erforderliche Stoffe verfügbar macht.

Zeichnerisch nicht näher dargestellt ist die Möglichkeit, die Materiallage 16 mehrlagig aufzubauen. Durch den mehrlagigen Aufbau können gezielt gewünschte Eigenschaften der Materiallage 16 eingestellt werden. So ist es auch möglich, in die Materiallage 16 Membranen einzubringen, die luftdurchlässig sind, gleichwohl aber als eine Art Dampfsperre wirken. Auch kann durch Membranen verhindert werden, dass langkettige Moleküle von Stoffen mit keimreduzierender Wirkung in die Stailluft gelangen.

Die Erfindung ist nicht auf die vorliegende gegenständliche Beschreibung anhand eines Ausführungsbeispiels beschränkt. Dem Fachmann bereitet es keine Schwierigkeiten, unter Beibehaltung der erfindungsgemäßen Lehre offenbarte Bauteile abzuändern oder diese durch gleich wirkende Alternativen zu ersetzen, wenn ihm dies aufgrund konkreter Einbaugegebenheiten sinnvoll erscheint.

## Patentansprüche

1. Lüftungsdecke (2) für Stallgebäude, die auf ihrer dem Stallraum zugewandten Unterseite mit beabstandet zueinander angeordneten Lüftungsschlitzen (6) versehene Zuluftplatten (4) und auf ihrer Oberseite zumindest eine Dämmschicht (8) aus einem Fasermaterial aufweist, **dadurch gekennzeichnet, dass** oberhalb der Zuluftplatten (4) eine Materiallage (16) mit einer keimreduzierenden Ausrüstung angebracht ist und/oder die Dämmschicht (8) eine keimreduzierende Ausrüstung aufweist.

2. Lüftungsdecke (2) nach Anspruch 1, **dadurch gekennzeichnet, dass** die Dämmschicht (8) zumindest zweilagig ausgestaltet und die Materiallage (16) mit der keimreduzierenden Ausrüstung zwischen zwei zueinander benachbarten Lagen der Dämmschicht (8) angeordnet ist.

3. Lüftungsdecke (2) nach Anspruch 1 oder 2, **dadurch gekennzeichnet, dass** die Materiallage (16) aus einem hydrophilen Material hergestellt ist.

4. Lüftungsdecke (2) nach einem der vorhergehenden Ansprüche, **dadurch gekennzeichnet, dass** der Lüftungsdecke (2) eine Sensoreinheit zur Bestimmung der Luftfeuchte der in das Stallgebäude einströmenden Zuluft und ein Luftbefeuchter vorgeordnet ist, wobei der Luftbefeuchter in Abhängigkeit der von der von der Sensoreinheit ermittelten Luftfeuchte in den Zuluftstrom zu- und/oder abschaltbar ist.

5. Lüftungsdecke (2) nach einem der vorhergehenden Ansprüche, **dadurch gekennzeichnet, dass** die Materiallage (16) mit einer Tränkungsquelle verbunden ist.

6. Lüftungsdecke (2) nach einem der vorhergehenden Ansprüche, **dadurch gekennzeichnet, dass** die Materiallage (16) mehrlagig aufgebaut ist.
